Europäisches Patentamt

European Patent Office

Office européen des brevets

(11) Publication number: **0 036 021**
**B1**

# EUROPEAN PATENT SPECIFICATION

(45) Date of publication of patent specification: 27.12.84

(21) Application number: 79900508.7

(22) Date of filing: 07.05.79

(86) International application number:
PCT/JP79/00111

(87) International publication number:
WO 80/02357 13.11.80 Gazette 80/26

(51) Int. Cl.³: **A 01 G 25/00,** A 01 G 27/00,
G 05 D 7/01

(54) METHOD AND APPARATUS FOR SOIL IRRIGATION.

(43) Date of publication of application:
23.09.81 Bulletin 81/38

(45) Publication of the grant of the patent:
27.12.84 Bulletin 84/52

(84) Designated Contracting States:
CH DE FR GB LU SE

(56) References cited:
JP-A-49 131 827
US-A-3 408 818
US-A-3 797 738
US-A-4 060 991

(73) Proprietor: Tsuruta, Yasuo
22-2, Sanno 4-chome
Ota-ku Tokyo 143 (JP)

(72) Inventor: Tsuruta, Yasuo
22-2, Sanno 4-chome
Ota-ku Tokyo 143 (JP)

(74) Representative: Gilmour, David Cedric Franklyn
et al
POTTS, KERR & CO. 15 Hamilton Square
Birkenhead Merseyside L41 6BR (GB)

Courier Press, Leamington Spa, England.

## Description

The present invention relates to a method and apparatus for soil irrigation.

It is an object of the present invention to provide a method and apparatus for enabling the constant supply of a definite amount of water to the roots of a group of plants without employing complex procedures and equipment.

The invention relates to a method of soil irrigation comprising maintaining a constant level of water within a water supply reservoir, laying ducting to conduct water filling said otherwise empty ducting from said supply reservoir along said ducting to the interior of at least one housing or casing having an opening in communication with the soil, and allowing water to pass along said ducting and upwardly from the ducting and into the permeable filler material.

The invention also relates to irrigation apparatus comprising at least one water supply reservoir and means for maintaining a constant level of water within said supply reservoir, water ducting means leading from said supply reservoir to at least one distributor means for distributing water into the soil, and wherein each distributor means comprises a housing or casing containing water permeable filler material to be in contact with the soil, and wherein the ducting means to contain only water extend into the interior of the casing so as to present therein an upwardly facing water containing supply portion for the passage of water into the filler material, with water containing and supply portion extending upwardly from the ducting means leading from the supply reservoir.

Various devices have been realized since ancient times for effecting utilization of irrigation water in order to maintain the prosperity of races.

However, in order to maintain the population which is increasing explosively day by day, the development of effectual utilization of irrigation water is now keenly urged having consideration of the limited efficiency of irrigated water.

The dripping method of irrigation practically applied for the first time by Symcha Blazs in 1930 has greened many deserts and barren lands. However, since the dripping method of irrigation requires flow control equipment, electrical solenoid valves and timer etc. it is relatively expensive and prone to breakdown.

An irrigation apparatus is known in accordance with the prior art portion of claims 1 from U.S. Patent Specification 3408818 of L. F. Hemphill which comprises water supply reservoirs 16, 16' and means 31 for maintaining a constant level of water within the supply reservoirs, water ducting means 18 leading from the supply reservoirs to distributor means 22 for distributing water into the soil. Each distributor means comprises a housing or casing containing water permeable filler material 24 in contact with the soil. The ducting means are to contain only water and extend into the interior of the casing so as to present therein an upwardly facing water containing and supply portion for the passage of water into the filler material, with the water containing and supply portion extending upwardly from the ducting means leading from the supply reservoir. The apparatus is such that, in use, water is sucked by the action of being absorbed by the filler material and is passed into the soil 27 by the action of gravity. The tubes 18 are buried underground and lead to open-topped and buried linings 22 filled with capillary material 25 and each conduit is positioned higher than the base of the associated liner.

With a known apparatus of this kind the housing or casing (liners 22) are relatively expensive and involve considerable expenditure of work since they have to be buried underground and are also prone to invasion by plant roots and are not able to operate to draw water uphill by suction effect.

The invention as claimed is intended to remedy these drawbacks and does so by being characterised by the feature that the housing or casing having an open bottom is arranged in its normal position of use to be supported on or extend above the surface of the soil so as to have at least an upwardly closed portion which does not permit the passage of air through the walls in the normal condition of use extending above the surface of the ground, and so as to have the opening in the bottom region permitting the permeable filler material to contact the soil on which the casing rests, and so as to allow water to pass into the permeable filler material from the ducting under capillary action and thereafter downwardly into the soil through the open bottom of the casing under the action of gravity and under capillary action.

The method and apparatus of the present invention may be installed in economic and simple manner without having to be buried underground and without being so prone to invasion by plant roots and exert an advantageous suction effect to draw water even up hill for irrigation purposes and achieves highly desirable irrigation effects. Furthermore, since the water supply, in case of the present invention, can be performed constantly employing only the natural disposition of water without using any costly and complex electrical equipment and the moisture tension of soil can be constant thus preventing the vain waste of water.

The invention will be described, by way of example, with reference to the accompanying drawings, in which:—

Fig. 1 is a schematic section through an irrigation apparatus according to the present invention showing a water supply system employing a closed water supply tank; and

Fig. 2 is a schematic illustration showing a side elevation and plan of a sloping farm land whereon the irrigation apparatus of the invention is arranged.

A sealed water supply tank 1 (hereafter described simple as water supply tank) is provided and has a drain or outlet pipe 2 fitted at the bottom with openings 3, 3' of the pipe 2 positioned so as to face the water surface 4 or 4' to induce the supply of water from within the water supply tank 1 to constant surface water supply tanks 5 and 5' to keep the water surface at definite position. The supply tanks 5, 5' are connected to each water supply portion 7 or 7' of an air tight casing 8 by a flexible water supply tube 6 or 6' (described hereafter simply as tube).

The air tight casing 8 (hereafter described simply as a casing) contains permeable fillers 9 which cover the water supply portion 7 and extend to the opening of the casing and are in contact with the soil.

The water within the water supply portion 7, is sucked up into the filler 9 by the action of capillary phenomenon and migrates to the opening of casing 8 penetrating through the fillers 9 into the soil and reaches the region of a group of the roots of a plant 10 (hereafter described simply as roots) penetrating into the soil.

To prime the apparatus for use in certain circumstances to commence irrigation, an air exhaust valve 17 in casing 8 is opened and water from within the constant water surface tank 5 fills the casing 8 in full and any air which existed within fillers 9 is exhausted through exhaust valve 17 and irrigation can be effected upon closing the air exhaust valve 17.

Since the casing 8 is filled with water by the operation described above, the amount of water which moves through fillers 9 can be controlled by the degree of siphonic action rising out of the head of water between the water level within the water supply portion 7 and the opening in the casing 8 which is in contact with the soil.

Once the water within the water supply portion 7 flows into the soil by being sucked through the fillers 9, the water level within water supply portion 7 can be maintained at definite level as the water is supplied to the water supply portion 7 from the constant water surface tank 5 through the tube 6, therefore, the amount of water which can be permeated into the soil from the opening of casing 8 moving through fillers 9 can be maintained at a definite amount.

When the water within the constant water surface tank 5 is supplied into the water supply portion 7, the air enters into the water supply tank 1, flowing into the drawing pipe 2 from the drain opening 3 thereby breaking the balance of head between atmospheric pressure within the water supply tank 1 against atmospheric pressure and the water and thus water is drained to the constant water surface tank 5 from the water supply tank 1 until the drain opening 3 is submerged beneath the water surface 4.

The height or level of water surfaces 4 or 4' can be adjusted by changing the height of openings 3 and 3'.

In such manner by the employment of irrigation method of this invention by means of which a definite amount of water may constantly soak directly into the soil from the opening of casing 8, stable irrigation to the group of roots can be achieved for the first time without least injuring the tension of moisture and at the same time, the loss of water penetration deep into the soil is avoided and the increase in the saline content in the soil resulting from the evaporation of water and irrigation process can be avoided or minimized or kept within acceptable boundaries in a manner not hitherto obtained.

The adjustment of the amount of water to be supplied to a group of roots in order to meet the requirements for the growth of a plant can be controlled by changing the level of the water surface 4 and 4' which can be effected by changing the height of the openings 3 and 3'.

When the water level within the water supply tank 1 drops with repeated or continued draining to the constant water surface tank 5 and 5' from the water supply tank 1 and when the buoyancy action of a control buoy or float 15 decreases and the float 15 pressed down by the water pressure of water in a supply pipe 11, water is thereby allowed to enter the supply tank 1 from the water supply pipe 11.

At the same time as water is supplied, air accumulated within the water supply tank 1 is exhausted through an air exhaust pipe 12.

At this moment, the float 15 is depressed into the inlet 14 of drain pipe 2 thus closing the flow of water therethrough from the water supply tank 1 towards the drain pipe 2 and thereby protecting the water level within the constant water surface tank 5 and 5' from useless rise.

When the water level within the water supply tank 1 reaches a level equivalent to the level of a pressure eliminating or balancing pipe 16 following the supply of water through the water supply pipe 11, in spite of the increased buoyancy pressure exerted as a result of the pressure of the head of water within the drain pipe 2, the float 15 which had been tightly located in the inlet 14, floats upwardly against the water pressure of the water supply tank 1 by the removal of load pressure rendered by the bursting emission of water from the pressure eliminating pipe 16 and recovers the air tightness of the water supply tank 1 by closing the water supply pipe 11 and exhaust pipe 12. Therefore, the draining to the constant water surface tank 5 and 5' can be performed smoothly.

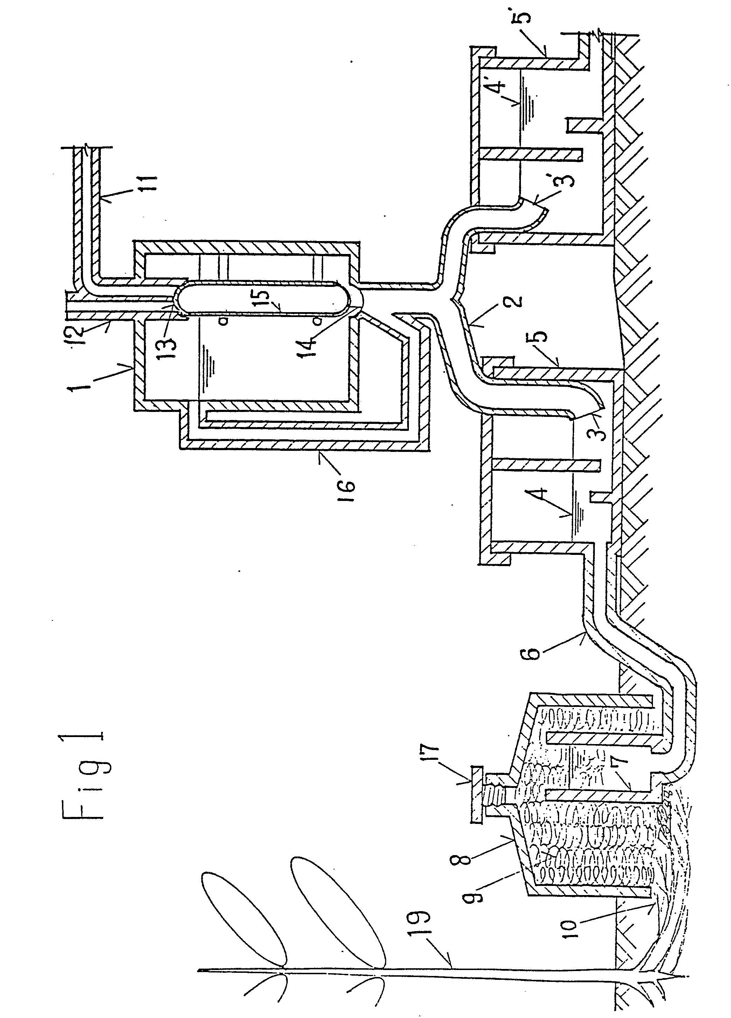

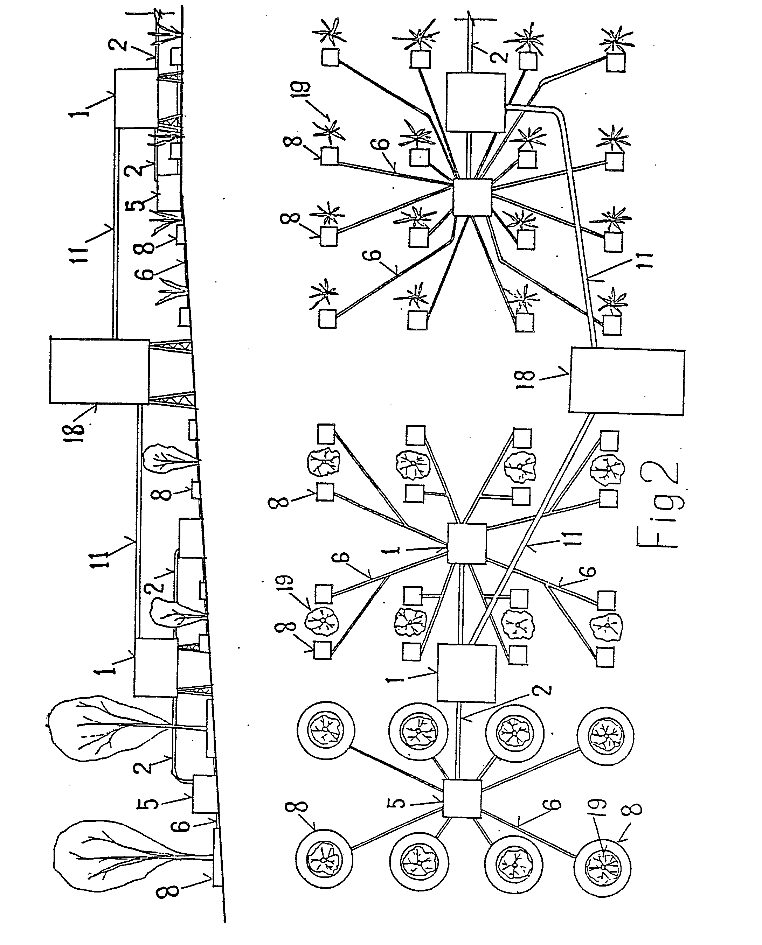

As shown in Fig. 2, water is supplied by the water supply pipe 11 from a large water storage tank 18 to the water supply tank (Fig. 1) which comprises a plurality of tanks. Then draining or flow of water takes place to the constant water surface tank — group 5 — comprising a plurality of tank by drain drain pipes 2 from the water supply tank 1. Then irrigation to a group of roots of each plant 19 is effected by supplying water to the casing 8, a group of eight, in which is embodied the water supply tank, by means of the tube 6 from the constant water surface tank 5.

In such manner, employing one set of irrigation system composed of a large water storage tank 18 provided as the centre, quite natural and efficient irrigation for large farms can be effected by employing only the natural disposition of water without using additional means such as electric power etc.

Therefore, even in deserts where conventional methods of irrigation have not been applicable at a large distance from a fountain, cultivation can be made possible by the transportation of water by a water supply vehicle at suitable time intervals.

Since the method of the invention can perform infiltrating irrigation directly into the roots of plants, waste of water such as resulting from evaporation and loss of water flow deep into the ground can be desirably avoided or minimized and the water required for irrigation can be secured by the transportation of water from water sources at great distances from farms.

The method and apparatus of the invention have potentiality for industrial application in, for example, the following uses, namely:—

1. For irrigation purposes for farms far from water sources where underground water is not obtainable:

2. As a labour saving means in the cultivation of potted plants etc; or

3. In the supply of water for plants in rooms whilst a family is absent.

## Claims

1. A method of soil irrigation comprising maintaining a constant level of water within a water supply reservoir, laying ducting to conduct water, filling said otherwise empty ducting from said supply reservoir along said ducting to the interior of at least one housing or casing having an opening in communication with the soil, and allowing water to pass along said ducting and upwardly from the ducting and into permeable filler material, characterised in that the housing or casing having an open bottom is arranged in its normal position of use to be supported on or extend above the surface of the soil so as to have at least an upwardly closed portion which does not permit the passage of air through the walls in the normal condition of use extending above the surface of the ground, and so as to have the opening in the bottom region permitting the permeable filler material to contact the soil on which the casing rests, and so as to allow water to pass into the permeable filler material from the ducting under capillary action and thereafter downwardly into the soil through the open bottom of the casing under the action of gravity and under capillary action.

2. A method as claimed in claim 1 wherein at the commencement of irrigation, the system is filled with water so that the filler material is saturated, and wherein part of the housing or casing above the soil has a vent during filling and is made air-tight once the system has been filled.

3. Irrigation apparatus comprising at least one water supply reservoir (5) and means (2, 3 and 3') for maintaining a constant level (4, 4') of water within said supply reservoir (5, 5'), water ducting means (6) leading from said supply reservoir (5, 5') to at least one distributor means (7, 8, 9) for distributing water into the soil, and wherein each distributor means comprises a housing or casing (8) containing water permeable filler material (9) to be in contact with the soil, and wherein the ducting means (6) to contain only water extend into the interior of the casing (8) so as to present therein an upwardly facing water containing supply portion (7) for the passage of water into the permeable filler material (9), with the water containing and supply portion (7) extending upwardly from the ducting means (6) leading from the supply reservoir (5, 5'), characterised by the feature that the housing or casing (8) containing the water permeable filler material (9) is open at one end and, in its normal position of use, is supported so as to have at least an upwardly closed portion which does not permit the passage of air through the walls in the normal condition of use extending above the surface of the soil, and so as to have the opening in the bottom region which, in use, permits the permeable filler material to contact the soil on which the casing rests, and in that each supply reservoir (5, 5') is located on the surface of the soil; wherein the apparatus is such that in use, water passes along the ducting and upwardly from the ducting into the permeable filler material under capillary action and thereafter downwardly into the soil through the open bottom of the casing under the action of gravity and under capillary action.

4. Apparatus as claimed in claim 3, characterised in that the ducting includes a pipe (6) which, in use, is preferably located on the surface of the soil, and said pipe (6) communicating with the filler material (9) via water containing supply reservoir means (7) locatable within the casing (8) and of larger diameter than the pipe (6), said supply reservoir means (7) having an upwardly facing opening within said casing (8) and being disposed, in use, so as to maintain a constant level of water therein.

5. Apparatus as claimed in claim 3, characterised in that a closeable exhaust valve (17) is provided on the top of the casing (8) containing filler material.

6. Apparatus as claimed in any of claims 3 to 5, characterised in that each constant surface water supply reservoir (5, 5') has water supplied thereto from a sealed water supply and reservoir means (1) normally located at a higher level by means of a tube (2) having a lower opening (3, 3') facing the water surface (4, 4') to maintain a constant water level (4, 4').

7. Apparatus as claimed in claim 6, characterised in that the position of the opening (3, 3') of said tube (2) is vertically adjustable.

8. Apparatus as claimed in any of claims 3 to 7 characterised in that sealed water supply means (1) for supplying water to constant level water supply reservoir (5, 5') includes a float (15) therein movable between a water inlet (13) and an outlet (14) of the supply means (1), and includes a water supply pipe (11) and an air exhaust pipe (12).

9. Apparatus as claimed in claim 8, characterised in that a pressure reducing pipe (16) is provided within the reservoir means (1) leading from an upper region in a manner so as to reduce filling pressure on the float (15).

10. Apparatus as claimed in any of claims 3 to 8, characterised in that the filler material extends from the bottom of the casing (8).

11. Apparatus as claimed in any of claims 3 to 10, in which the ducting means (6) leading from the supply reservoir (5, 5') to the housing or casing (8), in use, is also located on the surface of the soil.

**Patentansprüche**

1. Verfahren zur Bodenbewässerung, wobei in einem Wasserreservoir ein konstanter Wasserspiegel gehalten wird, wobei Leitungen zur Führung des Wassers verlegt werden, die sonst leeren Leitungen aus dem Reservoir längs der Leitungen zum Inneren mindestens eines Gehäuses oder Gefässes mit einer mit dem Boden kommunizierenden Oeffnung gefüllt werden, und wobei man das Wasser längs der genannten Leitungen und aufwärts aus den Leitungen in ein durchlässiges Füllmaterial fliessen lässt, dadurch gekennzeichnet, dass das Gehäuse oder Gefäss mit einem offenen Boden, in seiner normalen Gebrauchslage so angeordnet ist, dass es auf dem Boden ruht oder über denselben emporragt, sodass es mindestens eine oben geschlossenen Teil aufweist, welcher bei normaler Betriebslage keinen Luftzutritt durch die über der Bodenoberfläche liegenden Wandteile gestattet, und dass seine Oeffnung im Bereiche des Bodens liegt, derart dass das durchlässige Füllmaterial mit dem Boden in Berührung steht, auf welchem das Gehäuse ruht, derart, dass Wasser unter Kapillarwirkung aus den Leitungen in das durchlässige Füllmaterial eintreten und aus demselben nach unten durch die Bodenöffnung des Gehäuses unter der Wirkung der Schwerkraft und Kapillarität nach unten in den Boden austreten kann.

2. Verfahren nach Anspruch 1, worin zu Beginn der Bewässerung das System mit Wasser gefüllt wird, sodass das Füllmaterial gesättigt wird, und wobei ein Teil des Gehäuses oder Gefässes über dem Boden während der Füllung eine Belüftung aufweist, und luftdicht verschlossen wird, sobald das System gefüllt worden ist.

3. Bewässerungseinrichtung mit mindestens einem Wasserreservoir (5) und Mitteln (2, 3 und 3') zum Halten eines konstanten Wasserspiegels (4, 4') im genannten Reservoir (5, 5'), Wasserleitungsmitteln (6), welche vom erwähnten Reservoir (5, 5') zu mindestens einem Verteilungsmittel (7, 8, 9) zum Verteilen der Wassers in dem Boden führen, und wobei jedes Verteilmittel ein Gehäuse oder Gefäss (8) mit einem wasserdurch lässigen Füllmaterial (9) in Berührung mit dem Boden aufweist, und wobei die Leitungsmittel (6), die nur Wasser enthalten, ins Innere des Gehäuses (8) geführt sind, derart dass sie darin eine aufwärts gerichteten, Wasser enthaltenden Speiseteil (7) zur Durchleitung von Wasser in das durchlässige Füllmaterial (9) aufweisen, wobei der Wasser enthaltende Speiseteil (7) von den vom Reservoir (5, 5') herkommenden Leitungsmitteln (6) aufwärts ragt, dadurch gekennzeichnet, dass das Gehäuse oder Gefäss (8), welches das wasserdurchlässige Füllmaterial (9) enthält am einen Ende offen ist und in seiner normalen Gebrauchslage so abgestützt ist, dass es einen mindestens oben geschlossenen Teil aufweist, welcher bei normalen Betriebsbedingungen keinen Luftdurchtritt durch die über der Bodenfläche leigenden Wände gestattet, wobei die Oeffnung im Bereiche des Bodens liegt und im Betrieb Berührung zwischen dem durchlässigen Füllmaterial und dem Boden, auf welchem das Gehäuse steht gestattet, und dass jedes Reservoir (5, 5') auf der Bodenfläche angeordnet ist; wobei die Einrichtung derart ausgestaltet ist, dass im Betrieb Wasser längs der Leitungsmittel und unter Kapillarwirkung aufwärts aus den Leitungsmitteln in das durchlässige Füllmaterial und sodann unter der Wirkung der Schwerkraft und durch Kapillarität abwärts durch die Bodenöffnung des Gehäuses in den Boden fliesst.

4. Einrichtung nach Anspruch 3, dadurch gekennzeichnet, dass die Leitungsmittel ein Rohr (6) aufweisen, welches in Betriebslage vorzugsweise auf der Bodenfläche angeordnet ist, und welches Rohr (6) mit dem Füllmaterial (9) über Wasser enthaltende Speise-Reservoir-Mittel (7) kommuniziert, welche im Gehäuse (8) unterbringbar sind und einen grösseren Durchmesser als das Rohr (6) aufweisen, wobei die Spiese-Reservoir-Mittel (7) ein aufwärts gerichtete Oeffnung im genannten Gehäuse (8) aufweisen und im Betrieb so ausgelegt sind, dass darin ein konstanter Wasserspiegel gehalten wird.

5. Einrichtung nach Anspruch 3, dadurch gekennzeichnet, dass an der Oberseite des das Füllmaterial enthaltenden Gehäuses (8) eine schliessbares Auslassventil (17) angeordnet ist.

6. Einrichtung nach irgendeinem der Ansprüche 3—5, dadurch gekennzeichnet, dass jedes Wasserreservoir (5, 5') mit konstanter Wasseroberfläche mit Wasser aus einem geschlossenen Wasserversorgungs- und Reservoir-Mittel (1) versorgt wird, welches normalerweise auf einem höhern Niveau angeordnet ist, mittels einer Leitung (2) mit einer unteren Oeffnung (3, 3'), welche am Wasserspiegel (4, 4') anliegt, um diesen Wasserspiegel (4, 4') konstant zu halten.

7. Einrichtung nach Anspruch 6, dadurch gekennzeichnet, dass die Lage der Oeffnung (3, 3') der genannten Leitung (2) vertikal einstellbar ist.

8. Einrichtung nach irgendeinem der Ansprüche 3—7, dadurch gekennzeichnet, dass das geschlossene Wasserversorgungsmittel (1) zur Abgabe von Wasser zum Wasserreservoir (5, 5') mit konstantem Spiegel einen Schwimmer (15) aufweist, welcher zwischen einem Wassereinlass (13) und einem Auslass (14) des versorgungsmittels (1) beweglich ist, und dass eine Wasserzuleitung (11) und eine Entlüftungsleitung (12) vorgesehen ist.

9. Einrichtung nach Anspruch 8, dadurch gekennzeichnet, dass im Reservoir-Mittel (1) eine Druckreduzierleitung (16) vorgesehen ist, welche aus einem oberen Bereich derselben in den Auslassbereich des Reservoirs führt, derart dass der Fülldruck auf den Schwimmer (15) reduziert wird.

10. Einrichtung nach irgendeinem der Ansprüche 3—8, dadurch gekennzeichnet, dass sich das Füllmaterial vom Boden des Gehäuses (8) erstreckt.

11. Einrichtung nach irgendeinem der Ansprüche 3 —10, worin die Leitungsmittel (6) die vom Versorgungsreservoir (5, 5') zum Gehäuse oder Gefäss (8) führen, im Betrieb auch an der Bodenoberfläche angeordnet sind.

## Revendications

1. Un procédé d'irrigation du sol comprenant le maintient d'un niveau d'eau constant à l'intérieur d'unréservoir d'alimentation d'eau, la pose de canalisations pour conduire l'eau, le remplissage desdites canalisations par ailleurs vides à partir dudit réservoir d'alimentation et par lesdites canalisations de l'intérieur d'au moins un logement ou boîtier comprenant une ouverture en communication avec le sol, et l'amenée d'eau le long desdites canalisations ver le haut à partir des canalisations dans un matériau de remplissage perméable, caractérisé en ce que le longement ou boîtier avec un fond ouvert est disposé dans sa position normale d'utilisation de manière à être supporté sur ou à s'étendre au-dessus de la surface du sol afin d'avoir au moins une partie fermée vers la haut d'étendant au-dessus de la surface du sol et ne permettant pas le passage d'air à travers les parois dans la condition normale d'utilisation, en ce que l'ouverture dans la région de la base permet au matériau de remplissage perméable de venir en contact avec le sol sur lequel repose le boîtier afin de laisser passer l'eau dans le matériau de remplissage perméable par capilarité à partir des canalisations et ensuite vers le bas dans le sol sous l'action de la pesanteur et par capilarité.

2. Procédé selon la revendication 1, dans lequel, au début de l'irrigation, le système est rempli d'eau, de sorte que le matériau de remplisage est saturé et dans lequel la partie du logement ou boîtier au-dessus du sol a un évent pendant le remplissage et est rendue étanche à l'air lorsque le système a été rempli.

3. Appareillage d'irrigation comprenant au moins un réservoir d'alimentation d'eau (5) et des moyens (2, 3 et 3') pour maintenir un niveau d'eau constant (4, 4') à l'intérieur dudit réservoir d'alimentation (5, 5'), des moyens de canalisation (6) reliant ledit réservoir d'alimentation (5, 5') à au moins un moyen de distribution (7, 8, 9) pour distribuer de l'eau dans le sol, et dans lequel chaque moyen de distribution comprend un logement ou boîtier (8) contenant un matériau de remplissage perméable à l'eau (9) en contact avec le sol, et dans lequel les moyens de canalisation (6) ne contenant que de l'eau s'étendent à l'intérieur du boîtier (8) de manière à présenter dans celui-ci une partie d'alimentation (7) contenant de l'eau et orientée vers le haut pour le passage de l'eau dans le matériau de remplissage perméable (9), la partie d'alimentation (7) contenant de l'eau s'étendant vers le haut à partir des moyens de canalisation (6) venant du réservoir d'alimentation (5, 5'), caractérisé par le fait que le logement ou boîtier (8) contenant la matériau de remplissage perméable à l'eau (9) est ouvert à une extrémité et qu'il est supporté dans sa position normale d'utilisation de manière à avoir au moins une partie fermée s'étendant au-dessus de la surface du sol et orientée vers le haut qui ne permet pas le passage de l'air à travers les parois dans la condition normale d'utilisation, par le fait que l'ouverture dans la région de la base permet, en cours d'utilisation, le contact du matériau de remplisage perméable avec le sol sur lequel repose le boîtier, et par le fait que chaque réservoir d'alimentation (5, 5') est situé sur la surface du sol; l'appareillage étant tel qu'en cours d'utilisation, de l'eau passe le long de la canalisation et vers le haut par capilarité à partir de la canalisation dans le matériau de remplissage perméable et ensuite vers le bas dans le sol à travers le fond ouvert du boîtier sous l'action de la pesanteur et par capilarité.

4. Appareillage selon la revendication 3, caractérisé en ce que la canalisation comprend une conduite (6) qui, en cours d'utilisation, est située de préférence sur la surface du sol, ladite conduite (6) communiquant avec le matériau de remplissage (9) par des moyens de réservoir d'alimentation contenant de l'eau (7) logés dans le boîtier (8) et de plus grand diamètre que la conduite (6), lesdits moyens de réservoir d'alimentation (7) comprenant une ouverture dirigée vers le haut à l'intérieur dudit boîtier (8) et étant disposés, en cours d'utilisation, de manière à maintenir un niveau d'eau constant dans lesdits moyens.

5. Appareillage selon la revendication 3, caractérisé en ce qu'une soupape d'échappement susceptible d'être fermée (17) est prévue au sommet du boîtier (8) contenant le matériau de remplissage.

6. Appareillage selon l'une des revendication 3 à 5, caractérisé en ce que chaque réservoir d'alimentation d'eau (5, 5') reçoit de l'eau à partir de moyens étanches d'alimentation d'eau et de réservoir (1) situés normalement à un niveau plus élevé, à l'aide d'un tube (2) avec une ouverture basse (3, 3') située en face de la surface de l'eau (4, 4') pour maintenir un niveau d'eau constant (4, 4').

7. Appareillage selon la revendication 6, caractérisé en ce que la position des ouvertures (3, 3') dudit tube (2) est réglable verticalement.

8. Appareillage selon l'une des revendications 3 à 7, caractérisé en ce que des moyens étanches d'alimentation d'eau (1) pour délivrer de l'eau au réservoir d'alimentation d'eau à niveau constant (5, 5') comprennent un flotteur (15) mobile entre une entrée d'eau (13) et une sortie (14) des moyens d'alimentation (1) et comprennent en outre une conduite d'alimentation d'eau (11) et une conduite d'échappement d'air (12).

9. Appareillage selon la revendication 8, caractérisé en ce qu'une conduite de réduction de pression (16) est prévue à l'intérieur des moyens de réservoir (1), pour relier une région élevée du réservoir à la région de sortie du réservoir de manière à réduire la pression de remplissage sur le flotteur (15).

10. Appareillage selon l'une des revendications 3 à 8, caractérisé en ce que le matériau de remplissage s'étend à partir du fond du boîtier (8).

11. Appareillage selon l'une des revendications 3 à 10, dans lequel les moyens de canalisation (6) reliant le réservoir d'alimentation (5, 5') au logement ou boîtier (8) et, qu'en cours d'utilisation, ils sont aussi logés sur la surface du sol.

Fig 1

Fig 2